# EUROPEAN PATENT SPECIFICATION

(11) **EP 3 163 254 B1**
(45) Date of publication and mention of the grant of the patent: **25.12.2019**
(21) Application number: 16190955.1
(22) Date of filing: 27.09.2016
(51) Int. Cl.: G01C 21/20, H04W 4/30, B66B 3/00

(54) **METHOD AND DEVICE FOR INTELLIGENTLY GUIDING USER TO RIDE ELEVATOR/ESCALATOR**
VERFAHREN UND VORRICHTUNG ZUR INTELLIGENTEN FÜHRUNG VON BENUTZERN ZUM FAHREN MIT EINEM FAHRSTUHL/EINER ROLLTREPPE
PROCÉDÉ ET DISPOSITIF DE GUIDAGE INTELLIGENT UTILISATEUR D'ASCENSEUR/ESCALIER ROULANT

(30) Priority: 29.10.2015 CN 201510717742
(43) Date of publication of application: 03.05.2017
(73) Proprietor: Xiaomi Inc., Beijing 100085 (CN)
(72) Inventor: LONG, Fei, Haidian District, Beijing 100085 (CN); CHEN, Zhijun, Haidian District, Beijing 100085 (CN); ZHANG, Tao, Haidian District, Beijing 100085 (CN)
(74) Representative: Robson, Aidan John

(56) References cited:
- WO-A1-2014/132802
- US-A1- 2011 246 062
- US-A1- 2014 372 032
- US-A1- 2015 185 022

## Description

### TECHNICAL FIELD

The present disclosure generally relates to the field of computer communication technology, and more particularly, to a method and a device for intelligently guiding a user to an elevator/escalator.

### BACKGROUND

With the development and popularization of computer technology, Geography Information System (GIS) and "Digital Earth", "Digital City", "Digital Building" which are developed based on GIS, are playing more and more important roles in people's daily life.

Nowadays, in the field of GIS, application of indoor navigation has gained dramatic development. The indoor navigation can assist people located in a large-scale building, such as consumers in a large-scale shopping mall, to determine their own locations and places they want to be through an accurate positioning function. That is, the consumers can easily find designated places such as an escalator, a rest room, a designated store and the like in the large-scale building through indoor navigation.

US patent application US 2015/0185022 describes a method for providing a stereoscopic indoor route, which can effectively guide a route in consideration of various features and structures of the indoor space. For stereoscopic movement, such as going upstairs or downstairs in inter-floor movement route guidance is provided to a user by indicating up and down directions with a special arrow or icon and visualizing a route with icons for facilities, such as a general door, a revolving door, an escalator, and an elevator. International application WO 2014/132802 describes a method for providing a route guide using building information modeling (BIM) data. This method comprises: preparing the BIM data, security information relating to a route, and a user profile of a user that uses the route guide; and in response to the setting of a destination in a building by the user, creating the route guide to the destination on the basis of the BIM data, the security information, and the user profile. US patent application US 2011/246062 describes a mapping and directions system for receiving a geographical origin, receiving a geographical destination, generating a travel route from the origin to the destination, the travel route including at least one ground-level travel portion and at least one vertical travel portion, and calculating a travel time for the travel route from the origin to the destination.

### SUMMARY

In view of the above, the present disclosure provides a method and a device for intelligently guiding a user to an elevator/escalator, to solve the problem in the related art that it is difficult for people to find an elevator/escalator in a large-scale place. The invention is defined in the independent claims to which reference is now directed, with preferred features being specified in the dependent claims.

According to a first aspect of embodiments of the present disclosure, there is provided a method according to claim 1.

Optionally, the current location of the user is determined by any one of the following manners:
determining the current location of the user through a Global Positioning System;
determining the current location of the user through mobile positioning technology; and
determining the current location of the user through indoor positioning technology.

Optionally, acquiring a starting floor and a target floor of the user for an elevator/escalator includes:
starting an indoor navigation application APP; and
receiving the starting floor and the target floor inputted by the user through the indoor navigation application APP.

Optionally, an indoor navigation application APP is started through any one of the following manners:
starting the indoor navigation application APP in response to an operational instruction inputted by the user for starting the indoor navigation application APP; or
starting the indoor navigation application APP upon monitoring the current location of the user is within a preset distance range.

Acquiring route data for arriving at a target elevator/escalator based on the current location of the user, the starting floor and the target floor, includes:
determining a target elevator/escalator type for the target elevator/escalator based on a difference between the starting floor and the target floor;
acquiring a location of each elevator/escalator of the target elevator/escalator type on the starting floor; and
acquiring route data to arrive at a closet elevator/escalator of the target elevator/escalator type based on the current location of the user and all of the locations of the elevator/escalators of the target elevator/escalator type.

Determining a target elevator/escalator type for the target elevator/escalator based on a difference between the starting floor and the target floor includes:
calculating a difference value between the starting floor and the target floor;
deciding whether the difference value is smaller than a preset threshold;
if the difference value is smaller than the preset threshold, determining an escalator as the target elevator/escalator type; and
if the difference value is larger than or equal to the preset threshold, determining an elevator as the target elevator/escalator type.

Optionally, the method further includes:
when the target elevator/escalator type is an escalator, deciding whether the user has ridden a target escalator;
if the user has not ridden the target escalator, determining a second escalator;
acquiring second route data to arrive at the second escalator; and
guiding the user to the second escalator based on the second route data.

Optionally, deciding whether the user has ridden a target escalator includes:
deciding whether the user has ridden the target escalator based on a monitoring video; or
deciding whether the user has ridden the target escalator by inquiring the user.

According to a second aspect of embodiments of the present disclosure, there is provided a device according to claim 7.

Optionally, the location determining module includes:
a first determining sub-module configured to determine the current location of the user through a Global Positioning System;
a second determining sub-module configured to determine the current location of the user through mobile positioning technology; and
a third determining sub-module configured to determine the current location of the user through indoor positioning technology.

Optionally, the floor determining module includes:
a starting sub-module configured to start an indoor navigation application APP; and
a receiving sub-module configured to receive the starting floor and the target floor inputted by the user through the indoor navigation application APP.

Optionally, the starting sub-module includes:
a first starting unit configured to start the indoor navigation application APP in response to an operational instruction inputted by the user for starting the indoor navigation application APP; or
a second starting unit configured to start the indoor navigation application APP upon monitoring the current location of the user is within a preset distance range.

The first route determining module includes:
an elevator/escalator-type determining sub-module configured to determine a target elevator/escalator type for the target elevator/escalator based on a difference between the starting floor and the target floor;
a location acquiring sub-module configured to acquire a location of each elevator/escalator of the target elevator/escalator type on the starting floor; and
a route planning sub-module configured to acquire route data to arrive at a closet elevator/escalator of the target elevator/escalator type based on the current location of the user and all of the locations of the elevator/escalators of the target elevator/escalator type.

The elevator/escalator-type determining sub-module includes:
a calculating unit configured to calculate a difference value between the starting floor and the target floor;
a deciding unit configured to decide whether the difference value is smaller than a preset threshold;
a first type determining unit configured to, if the difference value is smaller than the preset threshold, determine an escalator as the target elevator/escalator type; and
a second type determining unit configured to, if the difference value is larger than or equal to the preset threshold, determine an elevator as the target elevator/escalator type.

Optionally, the device further includes:
a deciding module configured to, when the target elevator/escalator type is an escalator, decide whether the user has ridden a target escalator;
an escalator determining module configured to, if the user has not ridden the target escalator, determine a second escalator;
a second route determining module configured to acquire second route data to arrive at the second escalator; and
a second guiding module configured to guide the user to the second escalator based on the second route data.

Optionally, the deciding module includes:
a first deciding sub-module configured to decide whether the user has ridden the target escalator based on a monitoring video; or
a second deciding sub-module configured to decide whether the user has ridden the target escalator by inquiring the user.

In one particular embodiment, the steps of the method for guiding a user to an elevator/escalator are determined by computer program instructions.

Consequently, according to a third aspect, the invention is also directed to a computer program for executing the steps of a method for guiding a user to an elevator/escalator as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to embodiments of the present disclosure may have the following beneficial effects.

In the present disclosure, utilizing the GIS database of a large-scale building, a terminal of a user can automatically recommend elevator/escalator data to the user, and can generate route data for arriving at the target elevator/escalator, and can guide the user to the target elevator/escalator based on the route data. Thereby, it can quickly and intelligently provide navigation service for the user, and it can eliminate the trouble of searching for an elevator/escalator throughout the large-scale building for the user, saving time for user and improving user experience.

In the present disclosure, utilizing the Global Positioning System, mobile positioning technology or indoor positioning technology, the current location of the user can be determined. Thereby, it can ensure the accuracy in determining the current location of the user, so as to accurately recommend a target elevator/escalator to the user.

In the present disclosure, after the indoor navigation application APP is started, a starting floor and a target floor input by the user can be received through a user interface provided by the indoor navigation application APP. Thereby, the floor data can be more accurately acquired.

In the present disclosure, upon detecting that the user has entered a designated large-scale building, the terminal of the user can automatically start the indoor navigation application APP, load the GIS data of the building, and intelligently start the elevator/escalator recommending mode. The user can also manually start the indoor navigation application APP, and request the terminal of the user to provide an elevator/escalator recommending service. The operation is convenient.

In the present disclosure, the terminal of the user can intelligently select a most convenient elevator/escalator for the user based on the current location of the user, the starting floor and the target floor, generate corresponding route data to guide the user to the elevator/escalator along a shortest route. Thereby, it can save time of searching for an elevator/escalator for the user.

In the present disclosure, after the starting floor and the target floor are acquired, the difference between them is calculated. When the difference is relatively large, an elevator is recommended to the user; and when the difference is relatively small, an escalator is recommended to the user. Thereby, it can reasonably and wholly plan the utilization of the elevator/escalator resources.

In the present disclosure, after the user arrives at a target escalator, it is decided whether the user has ridden the target escalator as recommended. When it is determined that the running direction of the escalator is not as expected by the user, route data of a second escalator is automatically planned for the user. Thereby, when the user finds out that the running direction of the escalator is not as expected, the user can nevertheless quickly arrive at a closet escalator with a running direction as desired.

In the present disclosure, the monitoring video can be utilized to decide whether the user has ridden the target escalator. Alternatively, when the user arrives at the target escalator, a user interface is presented to inquire the user whether to the target escalator, to accurately decide whether the user has ridden the target escalator.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for intelligently guiding a user to an elevator/escalator according to an exemplary embodiment of the present disclosure;
Fig. 2 is a flow chart illustrating another method for intelligently guiding a user to an elevator/escalator according to an exemplary embodiment of the present disclosure;
Fig. 3 is a schematic diagram illustrating an application scenario of intelligently guiding a user to an elevator/escalator according to an exemplary embodiment of the present disclosure;
Fig. 4-1 is a schematic diagram illustrating an application scenario of intelligently guiding a user to an elevator/escalator according to an exemplary embodiment of the present disclosure;
Fig. 4-2 is a schematic diagram illustrating another application scenario of intelligently guiding a user to an elevator/escalator according to an exemplary embodiment of the present disclosure;
Fig. 4-3 is a schematic diagram illustrating another application scenario of intelligently guiding a user to an elevator/escalator according to an exemplary embodiment of the present disclosure;
Fig. 5 is a flow chart illustrating another method for intelligently guiding a user to an elevator/escalator according to an exemplary embodiment of the present disclosure;
Fig. 6 is a flow chart illustrating another method for intelligently guiding a user to an elevator/escalator according to an exemplary embodiment of the present disclosure;
Fig. 7 is a schematic diagram illustrating an application scenario of intelligently guiding a user to an elevator/escalator according to an exemplary embodiment of the present disclosure;
Fig. 8 is a flow chart illustrating another method for intelligently guiding a user to an elevator/escalator according to an exemplary embodiment of the present disclosure;
Fig. 9 is a block diagram of a device for intelligently guiding a user to an elevator/escalator according to an exemplary embodiment of the present disclosure;
Fig. 10 is a block diagram of another device for intelligently guiding a user to an elevator/escalator according to an exemplary embodiment of the present disclosure;
Fig. 11 is a block diagram of another device for intelligently guiding a user to an elevator/escalator according to an exemplary embodiment of the present disclosure;
Fig. 12 is a block diagram of another device for intelligently guiding a user to an elevator/escalator according to an exemplary embodiment of the present disclosure;
Fig. 13 is a block diagram of another device for intelligently guiding a user to an elevator/escalator according to an exemplary embodiment of the present disclosure;
Fig. 14 is a block diagram of another device for intelligently guiding a user to an elevator/escalator according to an exemplary embodiment of the present disclosure;
Fig. 15 is a block diagram of another device for intelligently guiding a user to an elevator/escalator according to an exemplary embodiment of the present disclosure;
Fig. 16 is a block diagram of another device for intelligently guiding a user to an elevator/escalator according to an exemplary embodiment of the present disclosure; and
Fig. 17 is a block diagram of a device for intelligently guiding a user to an elevator/escalator according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present disclosure. As used in the present disclosure and the appended claims, terms in singular forms such as "a", "said" and "the" are intended to also include plural forms, unless explicitly dictated otherwise. It should also be understood that the term "and/or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present disclosure, a first element can also be referred to as a second element. Similarly, a second element can also be referred to as a first element. Depending on the context, a term "if' as used herein can be interpreted as "when", "where" or "in response to"

For easy understanding, it should be firstly noted that, in embodiments of the present disclosure, an indoor navigation application APP executed on a terminal of a user can be provided. The user can install the APP on his/her mobile terminal. Correspondingly, an application server can provide indoor map data and can enable interaction with the indoor navigation application APP on the terminal of the user, so as to implement the function of guiding the user to an elevator/escalator through the terminal of the user.

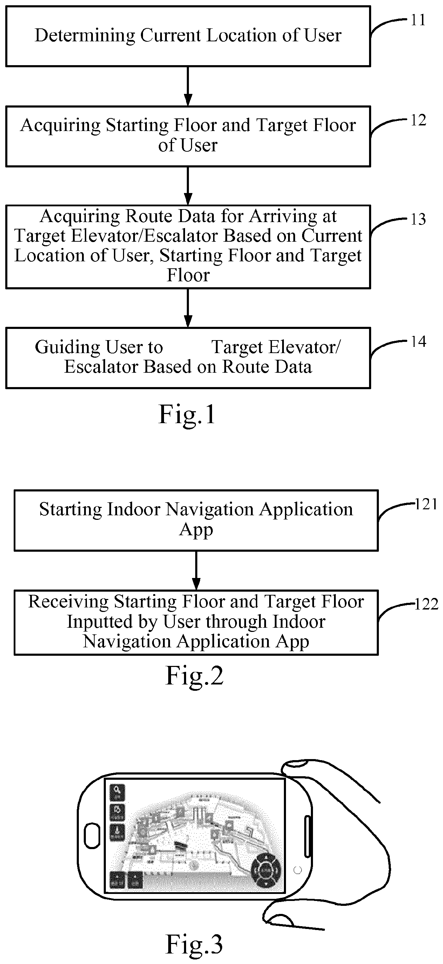

Fig. 1 is a flow chart illustrating a method for intelligently guiding a user to an elevator/escalator according to an exemplary embodiment, including the following steps.

In step 11, a current location of the user is determined.

In the present disclosure, the current location of the user can be represented by longitude and latitude and altitude, or can be represented by a direction and a distance with respect to a reference.

When a user carrying a terminal is located in a large-scale building such as a large-scale shopping mall, the terminal of the user can determine the current location of the user through any of the following manners.

First Manner: determining the current location of the user through a Global Positioning System.

Global Positioning System (GPS) is a navigation system based on satellite. GPS satellites fly around the Earth twice a day, moving in a very precise orbit and sending location data of themselves to the Earth. When a GPS receiver acquires the data, the GPS receiver can calculate an accurate current location of the user through triangulation techniques.

Second Manner: determining the current location of the user through mobile positioning technology.

For example, mobile positioning technology of Cell Of Origin (COO) can be used to determine the current location of the user carrying the terminal. Where, the COO mobile positioning technology is mobile positioning technology for searching for a location of a mobile user in a cell phone system. The technology represents a location with a region where the mobile terminal is located. Registering a base station where the mobile terminal is located can identify a corresponding region, and the current location of the terminal of the user can be determined by searching out the location of the base station.

Third Manner: determining the current location of the user through indoor positioning technology.

The indoor positioning technology includes: Bluetooth positioning, Zigbee positioning, Wi-Fi positioning, etc. Where, Wi-Fi positioning can be specifically: determining a current location of the terminal device through Wi-Fi finger print of the mobile device. The specific process can be: firstly, registering data of each indoor Access Point (AP); next, acquiring Received Signal Strength Indication (RSSI) of each AP at each acquiring point indoor, as a finger print of the acquiring point, referred to as a Wi-Fi finger print; then, the acquired Wi-Fi finger prints and locations are stored in a server; finally, when a terminal of a user needs to be positioned, uploading the Wi-Fi finger print of the terminal to the server, and the server deciding the current location of the terminal of the user according to the previously acquired data.

In step 12, a starting floor and a target floor of the user are acquired.

In the present disclosure, the starting floor of the user can be acquired through any of the following manners.

First Manner: based on the current location of the user acquired in step 11, with reference to a digital geographic model of a large-scale building, determining a floor where the user is currently located as the starting floor.

Second Manner: starting an indoor navigation application APP, and receiving a user input in the user interface of the APP as the starting floor.

The target floor can be acquired based on a target floor input by the user in the user interface of the APP.

Fig. 2 is a flow chart illustrating another method for intelligently guiding a user to an elevator/escalator according to an exemplary embodiment. Based on the embodiment as shown in Fig. 1, step 12 can include the following steps.

In step 121, an indoor navigation application APP is started.

In the present disclosure, generally, an indoor navigation application APP can be started in response to an operational instruction input by the user for starting the indoor navigation application APP. The above operational instruction from the user can be user identity data for verification input by the user, or a designated action, etc. For example, in the interface of the indoor navigation application APP on the terminal of the user, a user identification input by the user is received, the user identification can be a user account. After the background application performs identity verification on the above user identification, the indoor navigation application APP is started. Fig. 3 is a schematic diagram illustrating an application scenario of intelligently guiding a user to an elevator/escalator according to an exemplary embodiment of the present disclosure. For example, in response to an action performed by the user on an icon of an indoor navigation application APP, such as double clicks on the icon of the indoor navigation application APP, or the like, if, by comparing the performed action and a preset action, the action performed by the user matches with the preset action, the indoor navigation application APP is started and a corresponding user interface is presented, as shown in Fig. 3.

Alternatively, the indoor navigation application APP can be started when the current location of the user within a preset distance range is monitored.

For example, after the current location of the user is acquired, it is decided whether the user is within a preset shopping mall. When it is decided that the user has come into the above preset shopping mall, the indoor navigation application APP is started, as shown in Fig. 3.

In step 122, the starting floor and the target floor inputted by the user through the indoor navigation application APP are received.

The indoor navigation application APP can provide various functions, such as searching for a designated store, searching for public facilities such as a rest room, an elevator/escalator. The indoor navigation application APP can also provide a function of displaying information about products on the shelf. In the present disclosure, the function of the indoor navigation application APP in searching for an elevator/escalator is mainly utilized. Corresponding to the above elevator/escalator searching function, the indoor navigation application APP provides a corresponding user interface, such as a user interface entitled "elevator/escalator navigation". The user interface provides a user operation entrance through which the user can input the starting floor and the target floor of the user.

The specific implementation of interaction between the user and the smart device is relevant to the implementation of the user operation entrance. The implementation of the user operation entrance can be multiple forms, and correspondingly, the implementation of interaction between the user and the smart device can also be multiple forms.

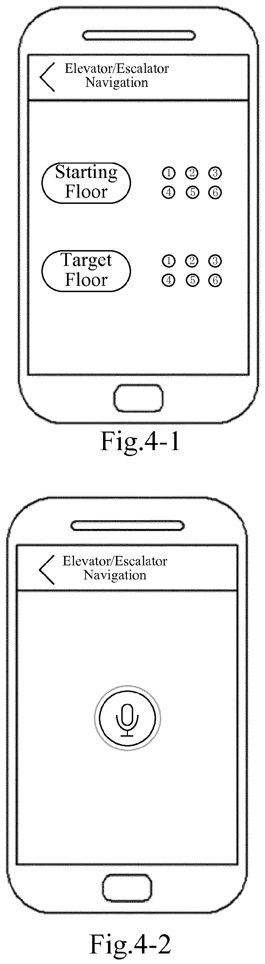

For example, as shown in Fig. 4-1, which is a schematic diagram illustrating an application scenario of intelligently guiding a user to an elevator/escalator according to an exemplary embodiment of the present disclosure, the user operation entrance is provided as operable buttons presented on the above user interface of elevator/escalator navigation. At present, most mobile phones are equipped with touch screens. Therefore, the user operation entrance can be provided as operable buttons presented on the above user interface, and the user can directly click the corresponding button on the touch screen to set the starting floor and the target floor.

Alternatively, as shown in Fig. 4-2, which is a schematic diagram illustrating an application scenario of intelligently guiding a user to an elevator/escalator according to an exemplary embodiment of the present disclosure, the user operation entrance is provided as a prompt of inputting voice on the above user interface of elevator/escalator navigation. The specific implementation can be providing a voice input button on the user interface of elevator/escalator navigation as the user operation entrance. After the user clicks the voice input button, a voice input device such as a microphone on the terminal of the user can be started, to receive voice information input by the user. For example, the user can say "from first floor to sixth floor" to the microphone on the terminal of the user. Correspondingly, the indoor navigation application APP can recognize the voice input signal, and set the starting floor as the first floor, and the target floor as the sixth floor.

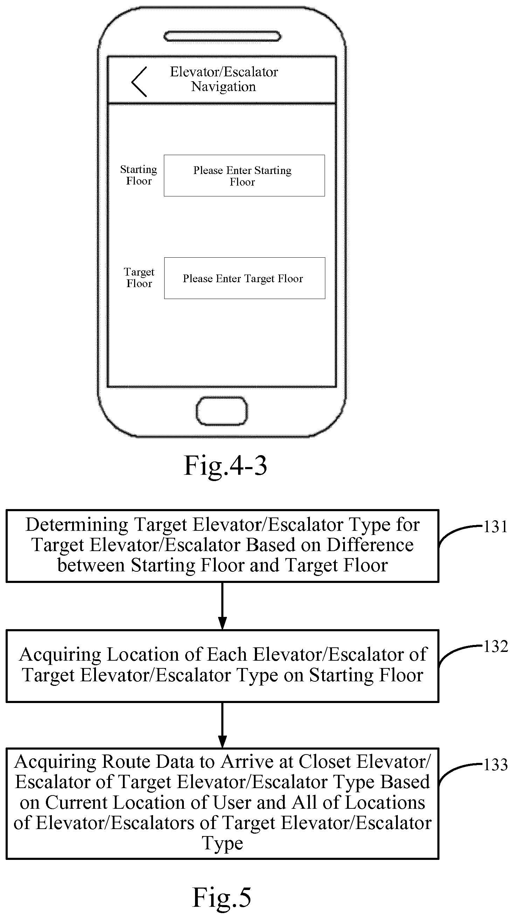

Alternatively, as shown in Fig. 4-3, which is a schematic diagram illustrating an application scenario of intelligently guiding a user to an elevator/escalator according to an exemplary embodiment of the present disclosure, the user operation entrance is provided as a prompt of inputting a text on the above user interface of elevator/escalator navigation. The specific implementation can be providing a text box for inputting a starting floor and a text box for inputting a target floor on the user interface of elevator/escalator navigation, as the user operation entrance. The user can, through a soft key board, input a starting floor, such as 1, in the text box for inputting a starting floor, and input a target floor, such as 6, in the text box for inputting a target floor.

In step 13, route data for arriving at a target elevator/escalator is acquired based on the current location of the user, the starting floor and the target floor.

Fig. 5 is a flow chart illustrating another method for intelligently guiding a user to an elevator/escalator according to an exemplary embodiment of the present disclosure. Based on the embodiment as shown in Fig. 1, the step 13 can include the following steps.

In step 131, a target elevator/escalator type for the target elevator/escalator is determined based on a difference between the starting floor and the target floor.

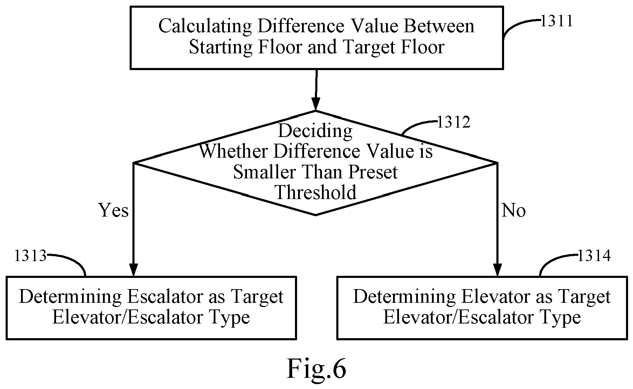

In an embodiment of the present disclosure, as shown in Fig. 6, which is a flow chart illustrating another method for intelligently guiding a user to ride an elevator/escalator according to an exemplary embodiment of the present disclosure, based on the embodiment as shown in Fig. 5, the step 131 can include the following steps.

In step 1311, a difference value between the starting floor and the target floor is calculated.

In step 1312, it is decided whether the difference value is smaller than a preset threshold; if the difference value is smaller than the preset threshold, it proceeds to step 1313, and if the difference value is not smaller than the preset threshold, it proceeds to step 1314.

In step 1313, an escalator is taken as the target elevator/escalator type.

In step 1314, an elevator is taken as the target elevator/escalator type.

It is assumed, for example, in the background application program of the indoor navigation application APP, the preset threshold is 3. Then, a preset rule can be: if the difference value is smaller than 3, an escalator is recommended to the user; and if the difference value is larger than 3, an elevator is recommended to the user.

For example, the terminal of the user acquires a starting floor 6, a target floor 4. Then, the difference value is 2. According to the above preset rule corresponding to the above preset threshold, since 2 is smaller than 3, the indoor navigation application APP recommends the user to an escalator to arrive at the target floor.

For another example, the terminal of the user acquires a starting floor 1, a target floor 6. Then, the difference value is 5. According to the above preset rule corresponding to the above preset threshold, since 5 is larger than 3, the indoor navigation application APP recommends the user to an elevator to arrive at the target floor. The above elevator can include a passenger elevator or a cargo elevator.

In step 132, a location of each elevator/escalator of the target elevator/escalator type on the starting floor is acquired.

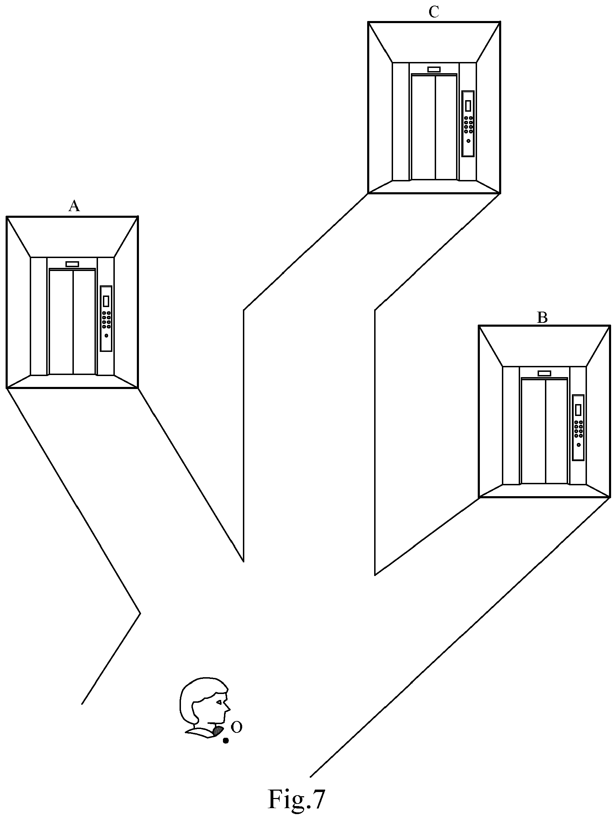

In the present disclosure, as shown in Fig. 7, which is a schematic diagram illustrating an application scenario of intelligently guiding a user to an elevator/escalator according to an exemplary embodiment of the present disclosure, corresponding to the above example, locations of all elevators on the floor where the user is currently located are acquired from the GIS database of the shopping mall. It is assumed that there are 3 elevators on the first floor, with identifications A, B and C, respectively corresponding to a first location, a second location and a third location.

In step 133, route data to arrive at a closet elevator/escalator of the target elevator/escalator type is acquired based on the current location of the user and all of the locations of the elevator/escalators of the target elevator/escalator type.

Corresponding to the above example, it is assumed that the current location of the user is at an entrance O of a store. Then, based on the current location of the user at the entrance and the above first location, the second location and the third location, a length of routs OA, OB and OC are respectively calculated, and a route with the shortest route length is taken as the route data. For example, after calculation and comparison, it can be obtained that the elevator B is the closest to the user, and thus, the route data for arriving at the elevator B is acquired.

Similarly, when the above target elevator/escalator type is an escalator, locations of all escalators on the current floor are acquired. An escalator closest to the user is calculated, and route data for arriving at the closest escalator is generated. For calculating an escalator closest to the user, not only distances of entrances of escalators to the user on the same floor are considered, but also which escalator is most convenient for the user to can be considered to select an escalator. For example, the starting floor of the user is 6, and the target floor is 4. Based on the GIS information of the shopping mall, locations of all escalators on the sixth floor are acquired. Moreover, it is decided whether there is an escalator from the sixth floor straight to the fourth floor. If there is such an escalator, the escalator straight to the fourth floor is selected as the target escalator in priority. If there is no escalator from the sixth floor straight to the fourth floor, a closest escalator is selected as the target escalator based on the distances of the escalators to the user.

In step 14, the user is guided to the target elevator/escalator based on the route data.

In the present disclosure, GIS can provide a three-dimensional visualization model of a large-scale building. For example, in a large-scale shopping mall, the above route data can be displayed in the three-dimensional visualization model of the large-scale shopping mall intuitively, and it can include a length of the route, directions, stores to be passed by, and so on. Similar to the navigation for automobiles in the related art, the indoor navigation application APP not only can intuitively display the current location of the user in real time, but also can prompt the user how to arrive at the target elevator along a route in real time. For example, at an intersection of several channels, a route will be displayed and meanwhile, a voice "Turning to the left, going straight for 30 meters, turning to the right, and arriving at elevator B" will be presented.

Accordingly, in the method for intelligently guiding a user to an elevator/escalator provided by the present disclosure, utilizing the GIS database of a large-scale building, elevator/escalator data can be automatically recommended to the user, and route data for arriving at the target elevator/escalator can be generated. Based on the route data, the user is guided to the target elevator/escalator. Thereby, it can quickly and intelligently provide navigation service for the user, and it can eliminate the trouble of searching for an elevator/escalator throughout the large-scale building for the user, saving time for user and improving user experience.

In the present disclosure, when the target elevator/escalator type is an escalator, there may be a situation where the running direction of the escalator is opposite to the running direction recorded in the GIS database, or where two adjacent escalators have the same running directions. Such situation will cause errors in route data provided by the terminal to the user.

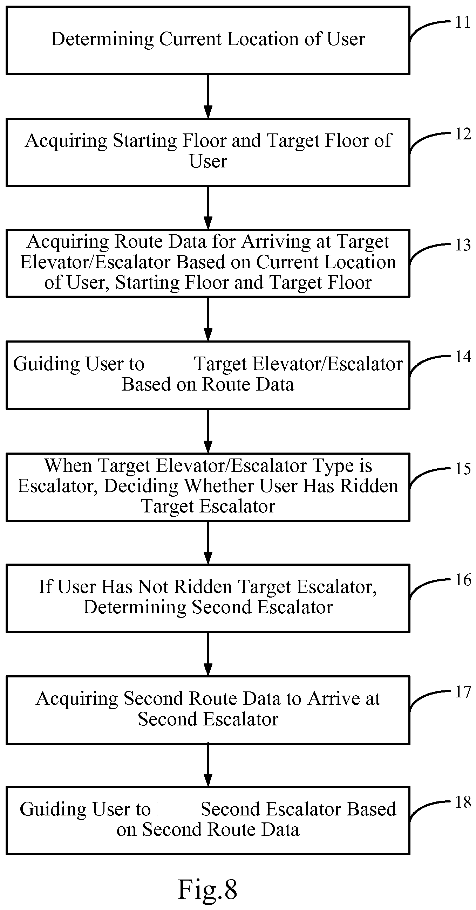

For the above situation, as shown in Fig. 8, which is a flow chart illustrating another method for intelligently guiding a user to an elevator/escalator according to an exemplary embodiment of the present disclosure, based on the embodiment as shown in Fig. 1, the method can also include the following steps.

In step 15, when the target elevator/escalator type is an escalator, it is decided whether the user has ridden a target escalator.

In the present disclosure, whether the user has ridden a target escalator can be decided through any of the following manners.

First Manner: deciding whether the user has ridden the target escalator based on a monitoring video.

For example, monitoring video data is acquired from a server of the shopping mall, and it is decided whether the user has ridden the target escalator as recommended from the monitoring video at the target escalator, which is photographed by the video monitoring system.

Second Manner: deciding whether the user has ridden the target escalator by inquiring the user.

For example, after the indoor navigation system detects that the user has arrived at the target escalator, a second user interface is presented, for inquiring the user whether the running direction of the escalator is correct through a dialog box, a selection button, voice prompt, or the like.

In step 16, if the user has not ridden the target escalator, a second escalator is determined.

Corresponding to the above first manner, if it is found in the monitoring video that the user does not the target escalator, for example, in the monitoring video, it can be seen that the user arrives at the target escalator and suddenly changes his way, it is considered in default that the running direction of the target escalator determined this time is wrong, and a new target escalator is selected again for the user as the second escalator.

Corresponding to the above second manner, feedback information to the above inquiring is received from the user. For example, if the user expects an escalator from the second floor to the third floor, but he finds out that the currently recommended target escalator is running from the third floor to the second floor, the user can input a negative answer through the user operation entrance on the second user interface. When it is determined that the running direction of the target escalator is opposite to the running direction expected by the user, a new target escalator is selected again for the user as the second escalator.

In step 17, second route data to arrive at the second escalator is acquired.

The route data for arriving at the second escalator can be determined based on the current location of the user and the location of the second escalator.

In step 18, the user is guided to the second escalator based on the second route data.

In the present disclosure, when the target elevator/escalator is an escalator, an additional step is provided after the step of guiding the user to the target escalator: deciding whether the user has ridden a target escalator. If it is detected that the user has not ridden the target escalator as recommended, it can be determined that the running direction of the current target escalator is wrong. In this case, a second escalator is determined again. Corresponding route data is generated to guide the user to conveniently the second target escalator.

For easy description purpose, the above described method embodiments are described as combination of a series of steps. However, it should be appreciated by those skilled in the art that, the present disclosure is not limited to the described performing order. Therefore, some steps can be performed in other orders or performed simultaneously according to the present disclosure.

Moreover, it should be appreciated by those skilled in the art that, the embodiments described in the description are all optional embodiments, the steps and modules involved are not necessarily for the present disclosure.

Corresponding to the above embodiments regarding a method for implementing an application, the present disclosure also provides embodiments regarding a device for implementing an application and a corresponding terminal.

Corresponding to the above embodiments regarding a method for intelligently guiding a user to an elevator/escalator, the present disclosure also provides embodiments regarding a device for intelligently guiding a user to an elevator/escalator. The embodiments are specifically described with reference to accompanying drawings.

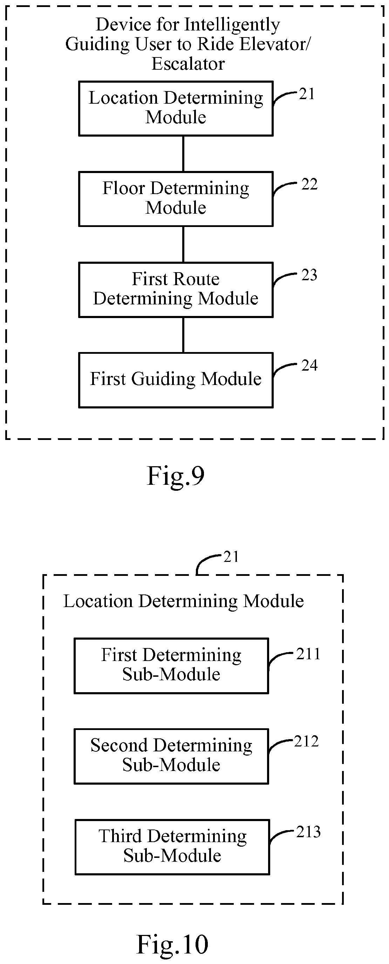

Fig. 9 is a block diagram of a device for intelligently guiding a user to an elevator/escalator according to an exemplary embodiment of the present disclosure. As shown in Fig. 9, the device includes:
a location determining module 21 configured to determine a current location of the user;
a floor determining module 22 configured to acquire a starting floor and a target floor of the user;
a first route determining module 23 configured to acquire route data for arriving at a target elevator/escalator based on the current location of the user, the starting floor and the target floor; and
a first guiding module 24 configured to guide the user to the target elevator/escalator based on the route data.

Fig. 10 is a block diagram of another device for intelligently guiding a user to an elevator/escalator according to an exemplary embodiment of the present disclosure. As shown in Fig. 10, based on the embodiment shown in Fig. 9, the location determining module 21 can include:
a first determining sub-module 211 configured to determine the current location of the user through a Global Positioning System;
a second determining sub-module 212 configured to determine the current location of the user through mobile positioning technology; and
a third determining sub-module 213 configured to determine the current location of the user through indoor positioning technology.

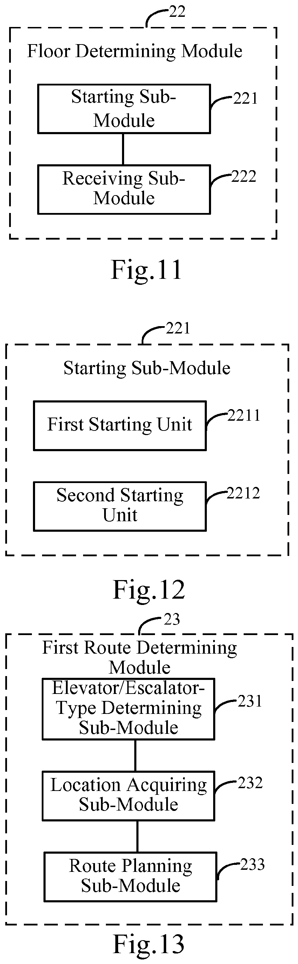

Fig. 11 is a block diagram of another device for intelligently guiding a user to an elevator/escalator according to an exemplary embodiment of the present disclosure. As shown in Fig. 11, based on the embodiment shown in Fig. 9, the floor determining module 22 can include:
a starting sub-module 221 configured to start an indoor navigation application APP; and
a receiving sub-module 222 configured to receive the starting floor and the target floor inputted by the user through the indoor navigation application APP.

Fig. 12 is a block diagram of another device for intelligently guiding a user to an elevator/escalator according to an exemplary embodiment of the present disclosure. As shown in Fig. 12, based on the embodiment shown in Fig. 11, the starting sub-module 221 can include:
a first starting unit 2211 configured to start the indoor navigation application APP in response to an operational instruction inputted by the user for starting the indoor navigation application APP; or
a second starting unit 2212 configured to start the indoor navigation application APP upon monitoring the current location of the user is within a preset distance range.

Fig. 13 is a block diagram of another device for intelligently guiding a user to an elevator/escalator according to an exemplary embodiment of the present disclosure. As shown in Fig. 13, based on the embodiment shown in Fig. 9, the first route determining module 23 can include:
an elevator/escalator-type determining sub-module 231 configured to determine a target elevator/escalator type for the target elevator/escalator based on a difference between the starting floor and the target floor;
a location acquiring sub-module 232 configured to acquire a location of each elevator/escalator of the target elevator/escalator type on the starting floor; and
a route planning sub-module 233 configured to acquire route data to arrive at a closet elevator/escalator of the target elevator/escalator type based on the current location of the user and all of the locations of the elevator/escalators of the target elevator/escalator type.

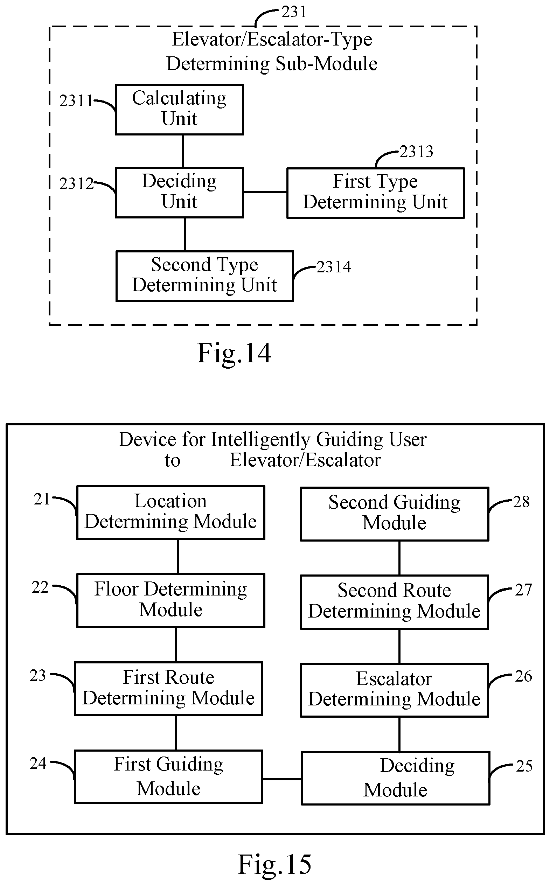

Fig. 14 is a block diagram of another device for intelligently guiding a user to an elevator/escalator according to an exemplary embodiment of the present disclosure. As shown in Fig. 14, based on the embodiment shown in Fig. 13, the elevator/escalator-type determining sub-module 231 can include:
a calculating unit 2311 configured to calculate a difference value between the starting floor and the target floor;
a deciding unit 2312 configured to decide whether the difference value is smaller than a preset threshold;
a first type determining unit 2313 configured to, if the difference value is smaller than the preset threshold, determine an escalator as the target elevator/escalator type; and
a second type determining unit 2314 configured to, if the difference value is larger than or equal to the preset threshold, determine an elevator as the target elevator/escalator type.

Fig. 15 is a block diagram of another device for intelligently guiding a user to an elevator/escalator according to an exemplary embodiment of the present disclosure. As shown in Fig. 15, based on the embodiment shown in Fig. 9, the device can include:
a deciding module 25 configured to, when the target elevator/escalator type is an escalator, decide whether the user has ridden a target escalator;
an escalator determining module 26 configured to, if the user has not ridden the target escalator, determine a second escalator;
a second route determining module 27 configured to acquire second route data to arrive at the second escalator; and
a second guiding module 28 configured to guide the user to the second escalator based on the second route data.

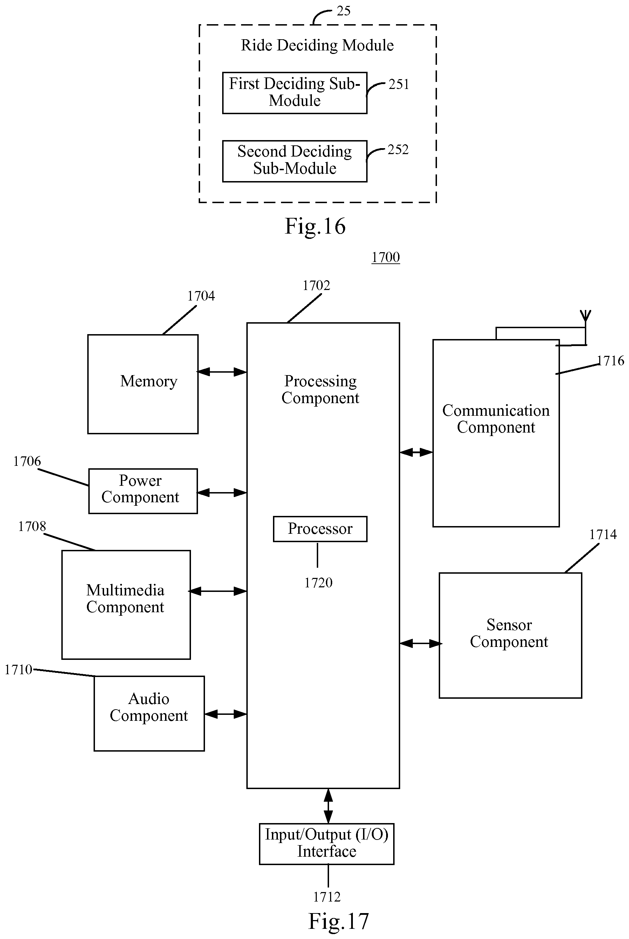

Fig. 16 is a block diagram of another device for intelligently guiding a user to an elevator/escalator according to an exemplary embodiment of the present disclosure. As shown in Fig. 16, based on the embodiment shown in Fig. 15, the deciding module 25 can include:
a first deciding sub-module 251 configured to decide whether the user has ridden the target escalator based on a monitoring video; or
a second deciding sub-module 252 configured to decide whether the user has ridden the target escalator by inquiring the user.

Implementation of the functions and operations of the modules in the above devices can be specifically referred to the implementation of the corresponding steps in the above methods, which will not be repeated herein.

For the device embodiments, since they correspond to the method embodiments, they can refer to the related parts of the description of the method embodiments. The device embodiments described above are merely illustrative. The units described as separate may be or may not be physically separate, and the components illustrated as units may be or may not be physical units, and may be at the same location, or may be distributed to multiple units over the network. A part of or all of the modules can be selected to achieve the objective of the present disclosure as desired. One skilled in the art can understand and practice the embodiments without paying creative labor.

In addition, the present disclosure also provides a device for intelligently guiding a user to an elevator/escalator, including:
a processor; and
a memory for storing instructions executable by the processor;
wherein the processor is configured to perform:
determining a current location of the user;
acquiring a starting floor and a target floor of the user;
acquiring route data for arriving at a target elevator/escalator based on the current location of the user, the starting floor and the target floor; and
guiding the user to the target elevator/escalator based on the route data.

Fig. 17 is a block diagram of a device 1700 for intelligently guiding a user to an elevator/escalator according to an exemplary embodiment. For example, the device 1700 can be a terminal of a user, such as a smart phone, a Personal Digital Assistant (PDA), a smart bracelet and other smart terminals.

Referring to Fig. 17, the device 1700 can include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 can include one or more processors 1720 to execute instructions to perform all or part of the steps in the above described methods. Moreover, the processing component 1702 can include one or more modules which facilitate the interaction between the processing component 1702 and other components. For instance, the processing component 1702 can include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, video, etc. The memory 1704 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the device 1700. The power component 1706 can include a power management system, one or more power sources, and any other components associated with the generation, management, and distribution of power in the device 1700.

The multimedia component 1708 includes a screen providing an output interface between the device 1700 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1708 includes a front camera and/or a rear camera. The front camera and the rear camera can receive an external multimedia datum while the device 1700 is in an operation mode, such as a photographing mode or a video mode. Each of the front camera and the rear camera can be a fixed optical lens system or have focus and optical zoom capability.

The audio component 1710 is configured to output and/or input audio signals. For example, the audio component 1710 includes a microphone ("MIC") configured to receive an external audio signal when the device 1700 is in an operation mode, such as a call mode, a recording mode, and a voice recognition mode. The received audio signal can be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons can include, but are not limited to, a home button, a volume button, a starting button, and a locking button.

The sensor component 1714 includes one or more sensors to provide status assessments of various aspects of the device 1700. For instance, the sensor component 1714 can detect an open/closed status of the device 1700, relative positioning of components, e.g., the display and the keypad, of the device 1700, a change in position of the device 1700 or a component of the device 1700, a presence or absence of user contact with the device 1700, an orientation or an acceleration/deceleration of the device 1700, and a change in temperature of the device 1700. The sensor component 1714 can include a proximity sensor configured to detect the presence of nearby objects without any physical contact. The sensor component 1714 can also include a light sensor, such as a CMOS or CCD image sensor, for use in imaging applications. In some embodiments, the sensor component 1714 can also include an accelerometer sensor, a gyroscope sensor, a magnetic sensor, a pressure sensor, or a temperature sensor.

The communication component 1716 is configured to facilitate communication, wired or wirelessly, between the device 1700 and other devices. The device 1700 can access a wireless network based on a communication standard, such as WiFi, 2G, or 3G, or a combination thereof. In one exemplary embodiment, the communication component 1716 receives a broadcast signal or broadcast associated information from an external broadcast management system via a broadcast channel. In one exemplary embodiment, the communication component 1716 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

## Claims

1. A method for intelligently guiding a user to an elevator/escalator, which is applied in a terminal, comprising:
determining (11) a current location of the user;
acquiring (12) a starting floor and a target floor of the user;
acquiring (13) route data for arriving at a target elevator/escalator based on the current location of the user, the starting floor and the target floor; and
guiding (14) the user to the target elevator/escalator based on the route data;
**characterised in that** acquiring (13) route data for arriving at a target elevator/escalator based on the current location of the user, the starting floor and the target floor, comprises:
determining (131) a target elevator/escalator type for the target elevator/escalator based on a difference between the starting floor and the target floor by:
calculating (1311) a difference value between the starting floor and the target floor;
deciding (1312) whether the difference value is smaller than a preset threshold;
if the difference value is smaller than the preset threshold, determining (1313) an escalator as the target elevator/escalator type; and
if the difference value is larger than or equal to the preset threshold, determining (1314) an elevator as the target elevator/escalator type
acquiring (132) a location of each elevator/escalator of the target elevator/escalator type on the starting floor; and
acquiring (133) route data to arrive at a closet elevator/escalator of the target elevator/escalator type based on the current location of the user and all of the locations of the elevator/escalators of the target elevator/escalator type.

2. The method of claim 1, wherein the current location of the user is determined by any one of the following manners:
determining the current location of the user through a Global Positioning System;
determining the current location of the user through mobile positioning technology; and
determining the current location of the user through indoor positioning technology.

3. The method of claim 1, wherein acquiring (12) a starting floor and a target floor of the user for riding an elevator/escalator comprises:
starting (121) an indoor navigation application APP; and
receiving (122) the starting floor and the target floor inputted by the user through the indoor navigation application APP.

4. The method of claim 3, wherein an indoor navigation application APP is started through any one of the following manners:
starting the indoor navigation application APP in response to an operational instruction inputted by the user for starting the indoor navigation application APP; or
starting the indoor navigation application APP upon monitoring the current location of the user is within a preset distance range.

5. The method of claim 1, wherein the method further comprises:
when the target elevator/escalator type is an escalator, deciding (15) whether the user has ridden a target escalator;
if the user has not ridden the target escalator, determining (16) a second escalator;
acquiring (17) second route data to arrive at the second escalator; and
guiding (18) the user to the second escalator based on the second route data.

6. The method of claim 5, wherein deciding whether the user has ridden a target escalator comprises:
deciding whether the user has ridden the target escalator based on a monitoring video; or
deciding whether the user has ridden the target escalator by inquiring the user.

7. A device for intelligently guiding a user to an elevator/escalator, comprising:
a location determining module (21) configured to determine a current location of the user;
a floor determining module (22) configured to acquire a starting floor and a target floor of the user;
a first route determining module (23) configured to acquire route data for arriving at a target elevator/escalator based on the current location of the user, the starting floor and the target floor; and
a first guiding module (24) configured to guide the user to the target elevator/escalator based on the route data;
**characterised in that** the first route determining module (23) comprises:
an elevator/escalator-type determining sub-module (231) configured to determine a target elevator/escalator type for the target elevator/escalator based on a difference between the starting floor and the target floor;
a location acquiring sub-module (232) configured to acquire a location of each elevator/escalator of the target elevator/escalator type on the starting floor; and
a route planning sub-module (233) configured to acquire route data to arrive at a closet elevator/escalator of the target elevator/escalator type based on the current location of the user and all of the locations of the elevator/escalators of the target elevator/escalator type;
wherein the elevator/escalator-type determining sub-module includes:
a calculating unit configured to calculate a difference value between the starting floor and the target floor;
a deciding unit configured to decide whether the difference value is smaller than a preset threshold;
a first type determining unit configured to, if the difference value is smaller than the preset threshold, determine an escalator as the target elevator/escalator type; and
a second type determining unit configured to, if the difference value is larger than or equal to the preset threshold, determine an elevator as the target elevator/escalator type.

8. The device of claim 7, wherein the location determining module (21) comprises:
a first determining sub-module (211) configured to determine the current location of the user through a Global Positioning System;
a second determining sub-module (212) configured to determine the current location of the user through mobile positioning technology; and
a third determining sub-module (213) configured to determine the current location of the user through indoor positioning technology.

9. The device of claim 7, wherein the floor determining module (22) comprises:
a starting sub-module (221) configured to start an indoor navigation application APP; and
a receiving sub-module (222) configured to receive the starting floor and the target floor inputted by the user through the indoor navigation application APP.

10. The device of claim 9, wherein the starting sub-module (221) comprises:
a first starting unit (2211) configured to start the indoor navigation application APP in response to an operational instruction inputted by the user for starting the indoor navigation application APP; or
a second starting unit (2212) configured to start the indoor navigation application APP upon monitoring the current location of the user is within a preset distance range.

11. A computer program including instructions for executing the steps of a method for guiding a user to an elevator/escalator according to any one of claims 1 to 6 when said program is executed by a computer.

12. A recording medium readable by a computer and having recorded thereon a computer program including instructions for executing the steps of a method for guiding a user to an elevator/escalator according to any one of claims 1 to 6.

## Patentansprüche

1. Verfahren zum intelligenten Führen eines Benutzers zu einem/r Aufzug/Rolltreppe, angewendet in einem Terminal, das Folgendes beinhaltet:
Feststellen (11) eines aktuellen Standorts des Benutzers;
Erfassen (12) eines Ausgangsstockwerks und eines Zielstockwerks des Benutzers;
Erfassen (13) von Routendaten zum Erreichen eines/r Ziel-Aufzugs/Rolltreppe auf der Basis des aktuellen Standorts des Benutzers, des Ausgangsstockwerks und des Zielstockwerks; und
Führen (14) des Benutzers zu dem/der Ziel-Aufzug/Rolltreppe auf der Basis der Routendaten;
**dadurch gekennzeichnet, dass** das Erfassen (13) von Routendaten zum Erreichen eines/r Ziel-Aufzugs/Rolltreppe auf der Basis des aktuellen Standorts des Benutzers, des Ausgangsstockwerks und des Zielstockwerks Folgendes beinhaltet:
Bestimmen (131) eines Ziel-Aufzug-/Rolltreppentyps für den/die Ziel-Aufzug/Rolltreppe auf der Basis einer Differenz zwischen dem Ausgangsstockwerk und dem Zielstockwerk durch:
Berechnen (1311) eines Differenzwerts zwischen dem Ausgangsstockwerk und dem Zielstockwerk;
Entscheiden (1312), ob der Differenzwert kleiner ist als eine voreingestellte Schwelle;
Bestimmen (1313), wenn der Differenzwert kleiner ist als die voreingestellte Schwelle, einer Rolltreppe als den Ziel-Aufzug-/Rolltreppentyp; und
Bestimmen (1314), wenn der Differenzwert genauso groß wie oder größer als die voreingestellte Schwelle ist, eines Aufzugs als Ziel-Aufzug-/Rolltreppentyp,
Erfassen (132) eines Orts jedes/r Aufzugs/Rolltreppe des Ziel-Aufzug-/Rolltreppentyps auf dem Ausgangsstockwerk; und
Erfassen (133) von Routendaten zum Erreichen eines/r Schrank-Aufzugs/Rolltreppe des Ziel-Aufzug-/Rolltreppentyps auf der Basis des aktuellen Standorts des Benutzers und aller Orte der Aufzüge/Rolltreppen des Ziel-Aufzug-/Rolltreppentyps.

2. Verfahren nach Anspruch 1, wobei der aktuelle Standort des Benutzers auf eine der folgenden Weisen bestimmt wird:
Bestimmen des aktuellen Standorts des Benutzers durch ein globales Positionierungssystem;
Bestimmen des aktuellen Standorts des Benutzers durch mobile Positionierungstechnologie; und
Bestimmen des aktuellen Standorts des Benutzers durch Innenraum-Positionierungstechnologie.

3. Verfahren nach Anspruch 1, wobei das Erfassen (12) eines Ausgangsstockwerks und eines Zielstockwerks des Benutzers für das Fahren mit einem/r Aufzug/Rolltreppe Folgendes beinhaltet:
Starten (121) einer Innenraum-Navigationsanwendung APP; und
Empfangen (122) des vom Benutzer eingegebenen Ausgangsstockwerks und Zielstockwerks durch die Innenraum-Navigationsanwendung APP.

4. Verfahren nach Anspruch 3, wobei eine Innenraum-Navigationsanwendung APP auf eine der folgenden Weisen gestartet wird:
Starten der Innenraum-Navigationsanwendung APP als Reaktion auf eine vom Benutzer eingegebene Betriebsanweisung zum Starten der Innenraum-Navigationsanwendung APP; oder
Starten der Innenraum-Navigationsanwendung APP nach dem Feststellen, dass der aktuelle Standort des Benutzers innerhalb eines voreingestellten Distanzbereichs ist.

5. Verfahren nach Anspruch 1, wobei das Verfahren ferner Folgendes beinhaltet:
Entscheiden (15), wenn der Ziel-Aufzug-/Rolltreppentyp eine Rolltreppe ist, ob der Benutzer mit einer Zielrolltreppe gefahren ist;
Bestimmen (16) einer zweiten Rolltreppe, wenn der Benutzer nicht mit der Zielrolltreppe gefahren ist;
Erfassen (17) von zweiten Routendaten zum Erreichen der zweiten Rolltreppe; und
Führen (18) des Benutzers zu der zweiten Rolltreppe auf der Basis der zweiten Routendaten.

6. Verfahren nach Anspruch 5, wobei das Entscheiden, ob der Benutzer mit einer Zielrolltreppe gefahren ist, Folgendes beinhaltet:
Entscheiden, ob der Benutzer mit der Zielrolltreppe gefahren ist, auf der Basis eines Überwachungsvideos; oder
Entscheiden, ob der Benutzer mit der Zielrolltreppe gefahren ist, durch Fragen des Benutzers.

7. Gerät zum intelligenten Führen eines Benutzers zu einem/r Aufzug/Rolltreppe, das Folgendes umfasst:
ein Standortbestimmungsmodul (21), konfiguriert zum Bestimmen eines aktuellen Standorts des Benutzers;
ein Stockwerkbestimmungsmodul (22), konfiguriert zum Erfassen eines Ausgangsstockwerks und eines Zielstockwerks des Benutzers;
ein erstes Routenbestimmungsmodul (23), konfiguriert zum Erfassen von Routendaten zum Erreichen eines/r Ziel-Aufzugs-/Rolltreppe auf der Basis des aktuellen Standorts des Benutzers, des Ausgangsstockwerks und des Zielstockwerks; und
ein erstes Führungsmodul (24), konfiguriert zum Führen des Benutzers zu dem/der Ziel-Aufzug/Rolltreppe auf der Basis der Routendaten;
**dadurch gekennzeichnet, dass** das erste Routenbestimmungsmodul (23) Folgendes umfasst:
ein Aufzug-/Rolltreppentyp-Bestimmungssubmodul (231), konfiguriert zum Bestimmen eines Ziel-Aufzug-/Rolltreppentyps für den/die Ziel-Aufzug/Rolltreppe auf der Basis einer Differenz zwischen dem Ausgangsstockwerk und dem Zielstockwerk;
ein Ortserfassungssubmodul (232), konfiguriert zum Erfassen eines Orts jedes/r Aufzugs/Rolltreppe des Ziel-Aufzug-/Rolltreppentyps auf dem Ausgangsstockwerk; und
ein Routenplanungssubmodul (233), konfiguriert zum Erfassen von Routendaten zum Erreichen eines/r Schrank-Aufzugs/Rolltreppe des Ziel-Aufzug/Rolltreppentyps auf der Basis des aktuellen Standorts des Benutzers und aller Orte der Aufzüge/Rolltreppen des Ziel-Aufzug-/Rolltreppentyps;
wobei das Aufzug/Rolltreppentyp-Bestimmungssubmodul Folgendes beinhaltet:
eine Recheneinheit, konfiguriert zum Berechnen eines Differenzwerts zwischen dem Ausgangsstockwerk und dem Zielstockwerk;
eine Entscheidungseinheit, konfiguriert zum Entscheiden, ob der Differenzwert kleiner ist als eine voreingestellte Schwelle;
eine erste Typenbestimmungseinheit, konfiguriert zum Bestimmen, wenn der Differenzwert kleiner ist als die voreingestellte Schwelle, einer Rolltreppe als Ziel-Aufzug-/Rolltreppentyp; und
eine zweite Typenbestimmungseinheit, konfiguriert zum Bestimmen, wenn der Differenzwert genauso groß oder größer ist als die voreingestellte Schwelle, eines Aufzugs als den Ziel-Aufzug-/Rolltreppentyp.

8. Gerät nach Anspruch 7, wobei das Ortsbestimmungsmodul (21) Folgendes umfasst:
ein erstes Bestimmungssubmodul (211), konfiguriert zum Bestimmen des aktuellen Standorts des Benutzers durch ein globales Positionierungssystem;
ein zweites Bestimmungssubmodul (212), konfiguriert zum Bestimmen des aktuellen Standorts des Benutzers durch mobile Positionierungstechnologie; und
ein drittes Bestimmungssubmodul (213), konfiguriert zum Bestimmen des aktuellen Standorts des Benutzers durch Innenraum-Positionierungstechnologie.

9. Gerät nach Anspruch 7, wobei das Stockwerkbestimmungsmodul (22) Folgendes umfasst:
ein Startsubmodul (221), konfiguriert zum Starten einer Innenraum-Navigationsanwendung APP; und
ein Empfangssubmodul (222) konfiguriert zum Empfangen des vom Benutzer durch die Innenraum-Navigationsanwendung APP eingegebenen Ausgangsstockwerks und Zielstockwerks.

10. Gerät nach Anspruch 9, wobei das Startsubmodul (221) Folgendes umfasst:
eine erste Starteinheit (2211), konfiguriert zum Starten der Innenraum-Navigationsanwendung APP als Reaktion auf eine vom Benutzer eingegebene Betriebsanweisung zum Starten der Innenraum-Navigationsanwendung APP; oder
eine zweite Starteinheit (2212), konfiguriert zum Starten der Innenraum-Navigationsanwendung APP, wenn festgestellt wurde, dass der aktuelle Standort des Benutzers innerhalb eines voreingestellten Distanzbereichs liegt.

11. Computerprogramm, das Befehle zum Ausführen der Schritte eines Verfahrens zum Führen eines Benutzers zu einem/r Aufzug/Rolltreppe nach einem der Ansprüche 1 bis 6 beinhaltet, wenn das genannte Programm von einem Computer ausgeführt wird.

12. Aufzeichnungsmedium, das von einem Computer gelesen werden kann und auf dem ein Computerprogramm mit Befehlen zum Ausführen der Schritte eines Verfahrens zum Leiten eines Benutzers zu einem/r Aufzug/Rolltreppe nach einem der Ansprüche 1 bis 6 aufgezeichnet ist.

## Revendications

1. Procédé de guidage intelligent d'un utilisateur vers un ascenseur/escalier mécanique, lequel est appliqué dans un terminal, comprenant :
la détermination (11) d'un emplacement actuel de l'utilisateur ;
l'acquisition (12) d'un étage de départ et d'un étage de destination de l'utilisateur ;
l'acquisition (13) de données d'itinéraire pour arriver à un ascenseur/escalier mécanique cible en fonction de l'emplacement actuel de l'utilisateur, de l'étage de départ et de l'étage de destination ; et
le guidage (14) de l'utilisateur jusqu'à l'ascenseur/escalier mécanique cible conformément aux données d'itinéraire ;
**caractérisé en ce que** l'acquisition (13) des données d'itinéraire pour arriver à un ascenseur/escalier mécanique cible en fonction de l'emplacement actuel de l'utilisateur, de l'étage de départ et de l'étage de destination, comprend :
la détermination (131) d'un type d'ascenseur/escalier mécanique cible de l'ascenseur/escalier mécanique en fonction d'une différence entre l'étage de départ et l'étage de destination en :
calculant (1311) une valeur de différence entre l'étage de départ et l'étage de destination ;
décidant (1312) que la valeur de différence est inférieure ou non à un seuil prédéfini ;
si la valeur de différence est inférieure au seuil prédéfini, déterminant (1313) qu'un escalier mécanique est le type d'ascenseur/escalier mécanique cible ; et
si la valeur de différence est supérieure ou égale au seuil prédéfini, déterminant (1314) qu'un ascenseur est le type d'ascenseur/escalier mécanique cible
l'acquisition (132) d'un emplacement de chaque ascenseur/escalier mécanique du type d'ascenseur/escalier mécanique cible à l'étage de départ ; et
l'acquisition (133) de données d'itinéraire pour arriver à un ascenseur/escalier mécanique le plus proche du type d'ascenseur/escalier mécanique cible en fonction de l'emplacement actuel de l'utilisateur et de tous les emplacements des ascenseurs/escaliers mécaniques du type d'ascenseur/escalier mécanique cible.

2. Procédé selon la revendication 1, dans lequel l'emplacement actuel de l'utilisateur est déterminé de l'une quelconque des manières suivantes :
en déterminant l'emplacement actuel de l'utilisateur au moyen d'un système de positionnement mondial ;
en déterminant l'emplacement actuel de l'utilisateur au moyen d'une technologie de positionnement mobile ; et
en déterminant l'emplacement actuel de l'utilisateur au moyen d'une technologie de positionnement en intérieur.

3. Procédé selon la revendication 1, dans lequel l'acquisition (12) d'un étage de départ et d'un étage de destination de l'utilisateur pour emprunter un ascenseur/escalier mécanique comprend :
le lancement (121) d'une application APP de navigation en intérieur ; et
la réception (122) de l'étage de départ et de l'étage de destination entrés par l'utilisateur par le biais de l'application APP de navigation en intérieur.

4. Procédé selon la revendication 3, dans lequel une application APP de navigation en intérieur est lancée de l'une quelconque des manières suivantes :
en lançant l'application APP de navigation en intérieur en réponse à une instruction opérationnelle entrée par l'utilisateur demandant de lancer l'application APP de navigation en intérieur ; ou
en lançant l'application APP de navigation en intérieur quand il est détecté que l'emplacement actuel de l'utilisateur se trouve en-deçà d'une distance prédéfinie.

5. Procédé selon la revendication 1, le procédé comprenant en outre :
quand le type d'ascenseur/escalier mécanique cible est un escalier mécanique, la décision (15) que l'utilisateur a emprunté ou non un escalier mécanique cible ;
si l'utilisateur n'a pas emprunté l'escalier mécanique cible, la détermination (16) d'un second escalier mécanique ;
l'acquisition (17) de secondes données d'itinéraire pour arriver au second escalier mécanique ; et
le guidage (18) de l'utilisateur jusqu'au second escalier mécanique en fonction des secondes données d'itinéraire.

6. Procédé selon la revendication 5, dans lequel la décision que l'utilisateur a emprunté ou non un escalier mécanique cible comprend :
la décision que l'utilisateur a emprunté l'escalier mécanique cible d'après une vidéo de surveillance ; ou
la décision que l'utilisateur a emprunté l'escalier mécanique cible en interrogeant l'utilisateur.

7. Dispositif de guidage intelligent d'un utilisateur jusqu'à un ascenseur/escalier mécanique, comprenant :
un module de détermination d'emplacement (21) configuré pour déterminer un emplacement actuel de l'utilisateur ;
un module de détermination d'étage (22) configuré pour acquérir un étage de départ et un étage de destination de l'utilisateur ;
un premier module de détermination d'itinéraire (23) configuré pour acquérir des données d'itinéraire pour arriver à un ascenseur/escalier mécanique cible en fonction de l'emplacement actuel de l'utilisateur, de l'étage de départ et de l'étage de destination ; et
un premier module de guidage (24) configuré pour guider l'utilisateur jusqu'à l'ascenseur/l'escalier mécanique cible en fonction des données d'itinéraire ;
**caractérisé en ce que** le premier module de détermination d'itinéraire (23) comprend :
un sous-module de détermination de type d'ascenseur/escalier mécanique (231) configuré pour déterminer un type d'ascenseur/escalier mécanique cible de l'ascenseur/escalier mécanique en fonction d'une différence entre l'étage de départ et l'étage de destination ;
un sous-module d'acquisition d'emplacement (232) configuré pour acquérir un emplacement de chaque ascenseur/escalier mécanique du type d'ascenseur/escalier mécanique cible à l'étage de départ ; et
un sous-module de planification d'itinéraire (233) configuré pour acquérir des données d'itinéraire pour arriver à un ascenseur/escalier mécanique le plus proche du type d'ascenseur/escalier mécanique cible en fonction de l'emplacement actuel de l'utilisateur et de tous les emplacements des ascenseurs/escaliers mécaniques du type d'ascenseur/escalier mécanique cible ;
dans lequel le sous-module de détermination du type d'ascenseur/escalier mécanique comporte :
une unité de calcul configurée pour calculer une valeur de différence entre l'étage de départ et l'étage de destination ;
une unité de décision configurée pour décider que la valeur de différence est inférieure ou non à un seuil prédéfini ;
une première unité de détermination de type configurée pour, si la valeur de différence est inférieure au seuil prédéfini, déterminer qu'un escalier mécanique est le type d'ascenseur/escalier mécanique cible ; et
une seconde unité de détermination de type configurée pour, si la valeur de différence est supérieure ou égale au seuil prédéfini, déterminer qu'un ascenseur est le type d'ascenseur/escalier mécanique cible.

8. Dispositif selon la revendication 7, dans lequel le module de détermination d'emplacement (21) comprend :
un premier sous-module de détermination (211) configuré pour déterminer l'emplacement actuel de l'utilisateur au moyen d'un système de positionnement mondial ;
un deuxième sous-module de détermination (212) configuré pour déterminer l'emplacement actuel de l'utilisateur au moyen d'une technologie de positionnement mobile ; et
un troisième sous-module de détermination (213) configuré pour déterminer l'emplacement actuel de l'utilisateur au moyen d'une technologie de positionnement en intérieur.

9. Dispositif selon la revendication 7, dans lequel le module de détermination d'étage (22) comprend :
un sous-module de lancement (221) configuré pour lancer une application APP de navigation en intérieur ; et
un sous-module de réception (222) configuré pour recevoir l'étage de départ et l'étage de destination entrés par l'utilisateur par le biais de l'application APP de navigation en intérieur.

10. Dispositif selon la revendication 9, dans lequel le sous-module de lancement (221) comprend :
une première unité de lancement (2211) configurée pour lancer l'application APP de navigation en intérieur en réponse à une instruction opérationnelle entrée par l'utilisateur demandant de lancer l'application APP de navigation en intérieur ; ou
une seconde unité de lancement (2212) configurée pour lancer l'application APP de navigation en intérieur lors de la détection que l'emplacement actuel de l'utilisateur se trouve en-deçà d'une distance prédéfinie.

11. Programme informatique comportant des instructions pour exécuter les étapes d'un procédé de guidage d'un utilisateur jusqu'à un ascenseur/escalier mécanique selon l'une quelconque des revendications 1 à 6 quand ledit programme est exécuté par un ordinateur.

12. Support d'enregistrement lisible par un ordinateur sur lequel est enregistré un programme informatique comportant des instructions pour exécuter les étapes d'un procédé de guidage d'un utilisateur jusqu'à un ascenseur/escalier mécanique selon l'une quelconque des revendications 1 à 6.
